# EUROPEAN PATENT SPECIFICATION

(11) **EP 0 178 924 B1**
(45) Date of publication and mention of the grant of the patent: **18.12.1996**
(21) Application number: 85307463.1
(22) Date of filing: 16.10.1985
(51) Int. Cl.: B61L 25/04

(54) **Electronic identification system**
Elektronisches Identifizierungssystem
Système électronique d'identification

(30) Priority: 17.10.1984 US 661712
(43) Date of publication of application: 23.04.1986
(73) Proprietor: CANADIAN NATIONAL RAILWAY COMPANY (CANADIAN NATIONAL), Montréal, Québec H3B 2M9 (CA)
(72) Inventor: Baldwin, Howard A., Lakeside Arizona 85929 (US); Walker, Conrad M.B., Edmonton Alberta T5P 4B7 (CA); Brockelsby, William K., Edmonton Alberta T6G 0T1 (CA)
(74) Representative: Heath, Derek James

(56) References cited:
- EP-A- 0 111 591
- EP-A- 0 111 753
- DE-A- 2 919 753
- US-A- 4 303 904

## Description

The invention relates to an identification system suitable for identifying objects from a remote interrogation station. More specifically, the invention provides an electronic identification device including logic circuit and memory, trigger circuit and a transmitter positioned on an object and a remote interrogation station including a receiver and data processor, together with a means for remotely programming the electronic identification device with transient information when the object is moving relative to the interrogation station.

There is a need for an identification system wherein moving objects such as railroad cars passing an interrogation station identify themselves for both accounting and control purposes. Such a system would also be applicable to boats, trucks, shipping containers, mailbags, pallets, etc. . As well as these commercial applications, there is also a need for an identification system for monitoring animals in their natural habitat, including both fish and birds. The system could be applicable for identification of humans for control and security purposes, the identification of livestock and many other uses. In addition to the above uses, the ability to read, write, delete or modify data in a digital form makes the system applicable to a variety of uses, an example of which is a credit card. In this case the system serves as a portable interrogatable memory for information such as a credit balance.

The complexity of modern transportation systems has increased to the point where automated traffic management has become essential for efficient operation. This is true of railways, highway truck transportation, urban transit systems, mining and logging operations, livestock management and even factory personnel, to name but a few.

Early attempts to meet these needs followed the premise that all that was necessary was to identify the individual vehicles automatically and all other management functions could then be carried out in a central computer. This notion belies the fact that a vast amount of data communications with a central data base are then required. In many cases, particularly where operations cover a large geographic area, this approach is both expensive and impractical. In addition, initial encoding of earlier devices was not satisfactory. The device was either factory programmed, requiring a cross reference table to relate its arbitrary number to that of the vehicle, or it was field programmed by physical and/or electrical contact, requiring a sealing operation in the field to ensure package integrity.

DE-A1-29 19 753 discloses an electronic identification device wherein a stationary interrogator sends an interrogation signal to a response device that may be located on, for example, a vehicle. The response device may convert energy emitted by the interrogator to a power supply or it may be battery powered. The response device has a read-only memory and a read-write memory. An "opening" code sent by the interrogator is compared to a stored code and, in the event of a match, the response device transmits data from the memories. The recording of data into the read-write memory can, like the read-out, be made dependent on a specific opening code being emitted by the interrogator.

US4,303,904 discloses an on-the-fly toll road system. An interrogator sends a signal which prompts a transponder on a vehicle to send data from a read-only memory and from a read-write memory. Data may also be sent to the transponder and read into the read-write memory. The vehicle transponder is battery powered but has an amplifier which assumes a low power quiescent state until an interrogation signal is detected. In the transponder, during read-out, a clock generates timing clock pulses that are added to the transmitted data stream so as to be recoverable.

The present invention proceeds from DE-A1-2 919 753 and US-A-4 303 904 and is directed to an electronic identification system having the features of claim 1. Preferred features of the invention are set forth in the subsidiary claims.

The present invention provides an electronic identification system that can store both fixed and changing information on a moving object, such as a railroad car, without physical contact and while the object is moving at relatively high speeds. Furthermore a portion of the information stored on the object is protected from accidental erasure so that portion cannot be changed without further steps being taken.

In the case of a railroad car, the system may provide the car's identity and other pertinent information relating to the car. Some of the information is protected from erasure, such as the identification number, the type of car and loading limits, and other information such as destination, contents, special handling considerations etc. can be reprogrammed remotely from an interrogation station.

To provide for high speed transmission of information, a memory that can be read and changed and has a number of separate pages to store information, may be located on the object. Different interrogation stations can then be placed to send a coded interrogation signal to read individual pages of information. Some pages are protected from erasure as they contain fixed information, while other pages may be remotely changed as desired. By utilizing separate pages in the memory, and more than one interrogation station, more information can be gathered in a shorter space of time, thus allowing higher relative speeds between the object and the interrogation station. The information gathered by the interrogation stations may be transmitted in a computer compatible format for storage or transmission by existing data communication systems.

Another use for the system is to place electronic identification devices along a path such as a railroad track and install an interrogation station on a moving vehicle such as a train. This provides accurate position information for the vehicle.

The electronic identification system of the present invention has an information and identity storage device including a logic circuit and memory, trigger circuit and a transmitter located on the object with the trigger circuit operating on low power. Upon being triggered by a signal from a remote interrogation station, the transmitter preferably transmits the data in the memory in a short series of transmissions. Power for the transmitter is provided by a battery. Battery power may be supplemented with other sources of power such as an inertial generator, electromagnetic radiation, induction, visible or infrared light, or by combinations of these power sources. Moving objects can generate power for the transmitter from movement or vibration in a gravitational field. These techniques can extend the life of the battery.

The interrogation station, as well as sending a signal to trigger the trigger circuit, also has a pulse sequence generator to program the memory and a receiver to receive the data from the memory on the object. The use of an absolute time source in the information and identity storage device and in the interrogation station provides for synchronization between the transmitter and the receiver and allows the use of a non-return to zero code format. Alternatively, a free running clock can be used in the information and identity storage device and synchronization can be effected by choice of a suitable code format and appropriate processing in the decoding unit.

This system has the additional advantage of allowing the clock oscillator to be gated off between interrogations with further savings in quiescent power consumption. The data transfer rate for the transmitter should be sufficient to allow for the movement velocity between the object to be identified and the interrogation station.

In one embodiment the memory bank associated with the information and identity storage device on the vehicle can store 256 bits divided into four 64 bit pages. The first page could contain the most important information including the identity of the vehicle and can be read at speeds up to 320 km/hr. The other pages can be read by the same interrogation station at lower speeds or by a different station. 34 bits on the first page of the memory are "write-protected" to prevent erasure. When the information and identity storage device is physically removed from a vehicle, the "write protected" portion of the memory bank can be reprogrammed for use on a different vehicle without physical alterations. In one embodiment these "write protected" bits can be reprogrammed by illuminating a light activated switch located on the information and identity storage device.

In railcar use a microwave signal may be transmitted and received between the transmitter and the receiver. Other radio frequency, optical or inductive schemes are feasible. In the case of railroad cars, an interrogation station may read at a distance of up to 5 metres, but this distance can be increased to several kilometres for different uses, or reduced for other uses. The information and identity storage devices have to be suitably packaged for protection against weather and other environmental conditions and have antennas to allow transmission and receipt of coded signals in suitable locations.

Where the memory means has the ability to store a plurality of pages representing the information and identity, the logic circuit means can select from the plurality of pages upon receipt of predetermined timed interrogation pulses from the interrogation station. The decoder means may verify the accuracy of the coded signal by including an integral count of the number of zeros in the coded signal.

In a still further embodiment, a wheel contact signal means is provided for use on a railroad car to indicate arrival of each car at the interrogation station. In drawings which illustrate embodiments of the invention,
Fig. 1 is a simple block diagram illustrating one embodiment of the information and identity storage device and the interrogation station of the present invention,
Fig. 2 is a schematic diagram illustrating one embodiment of an additional power source derived from vibrational movement,
Fig. 3 is a block diagram of a logic circuit in the information and identity storage device,
Fig. 4 is a schematic diagram of a microwave trigger circuit,
Fig. 5 is a block diagram of the interrogation station,
Fig. 6 is a block diagram showing the coded signal receiver in the interrogation station.

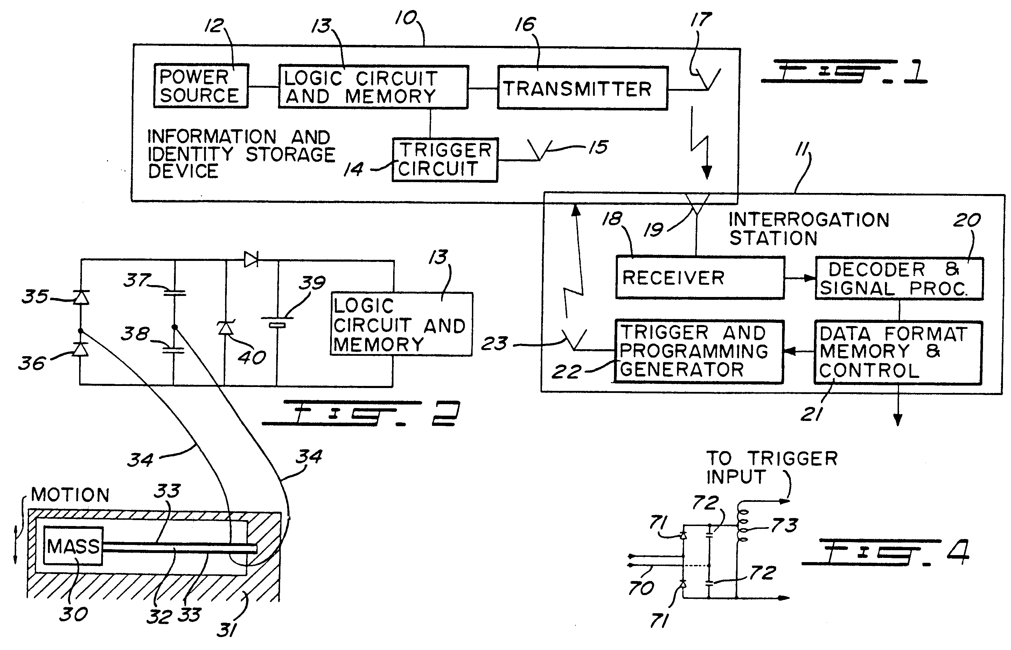

Referring now to Fig. 1, the components of the electronic identification system include an information and identity storage device 10 and an interrogation station 11. The information and identity storage device 10 includes a power source 12, a logic circuit and memory 13, a trigger circuit 14 with a first antenna 15 and a radio frequency transmitter 16 and a second antenna 17. The interrogation station 11 includes a receiver 18 with an antenna 19, a decoder 20, a data processor 21, and a trigger interrogation and pulse sequence generator 22 with an antenna 23. The data processor 21 aids in the decoding process, formats the data for communication with a central data processing unit (not shown) and generally controls the various functions of the interrogation station 11. In general the complexity of the data processor 21 depends on the particular function which the whole identification system is required to perform.

The power from the power source 12 for data retention in the memory of the information and identity storage device 10 must be present at all times (unless an EEPROM is used) and so a battery is required. However, the battery could be supplemented by other power sources including energy transfer from inductive or radio-frequency energy fields, of which several examples exist in prior art, or inertial field generation as described herein. In many embodiments, of which railroad cars are one example, the power requirements are such that available batteries could provide up to 20 year lifetimes without supplemental sources of energy.

For those applications where additional energy is required, and where the object requiring data storage is in motion, a means for producing power for data transmission is from the inertial field.

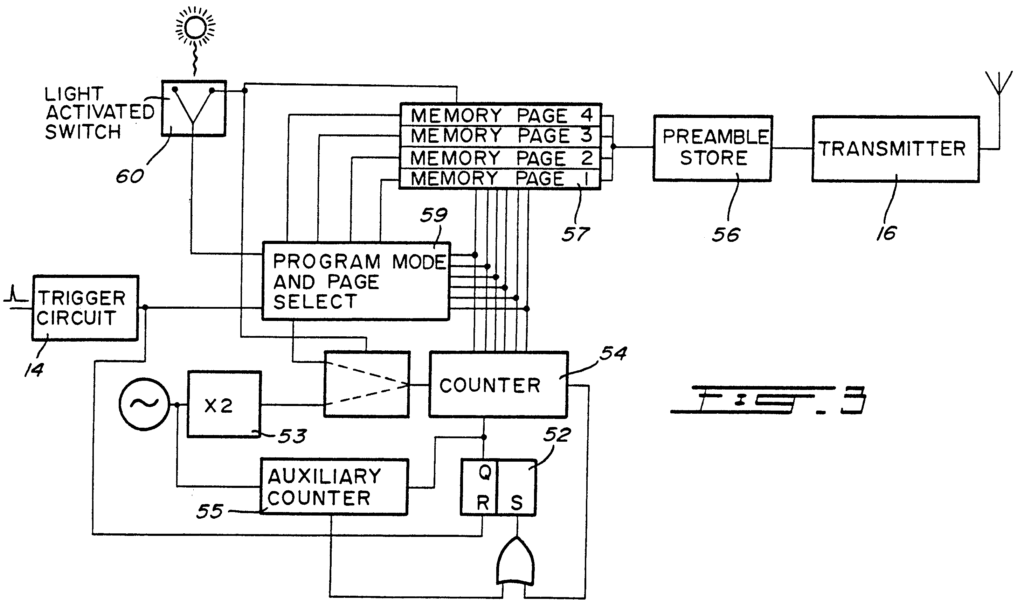

Fig. 2 illustrates an inertial energy generator where power is derived from the vibration or vertical movement of the moving object. A small mass 30 is shown mounted in a frame 31 on one end of a resilient strip 32. Piezoelectric material 33 is bonded to each side of the strip 32, and a movement of the mass 30 causing deflection of the strip 32 generates an alternating voltage. Leads 34 from the piezoelectric material 33 feed to a circuit where rectification and doubling of the voltage is performed by the diodes 35, 36 and the energy storage capacitors 37, 38. Alternatively, an ordinary full wave or half wave rectifier may be used if the higher voltage is not required. The direct current energy can either be stored in the capacitors 37, 38 or in a rechargeable battery 39. A means of limiting the maximum voltage is provided in the form of a zener diode 40 or by a number of diodes in series, or by a voltage regulator circuit.

The contents of the memory is maintained by a battery power source 12 which provides sufficient energy to the transmitter 16 so that the coded signal is completely transmitted before the stored power drops low enough to stop the data transmission. The transmitter 16 draws little power from the power source 12, in its quiescent state, allowing excess generated energy to be stored for later transmission.

The data to be transmitted from the information and identity storage device 10 must be formated in such a way that the desired information is conveyed accurately. While the following scheme is the preferred embodiment for marking railroad cars, a number of variations are possible. In general, the data will contain coded information to designate the owner of the car and the car serial number in a protected portion of the memory.

Data bits can be coded in various ways. For North American railroad applications, where cars associated with various owners are intermixed, a code is allocated to the protected portion of the memory frame as follows:
- 9 bits:: represent car owner
- 20 bits:: represent car serial number
- 5 bits:: are used as a check (zero count)
The data code stream contains either a means of self synchronization relying on the code format, or an external or inherent method of synchronization is provided. In one embodiment synchronization in some form is provided at the interrogation station to clock the identification device. An alternative solution is to provide an absolute time source such as a clock with the identification device, the clock being stable enough so that synchronization of a second independent clock in the interrogation station is maintained within a single bit for the period of time required to transmit the coded signal. The availability of low cost accurate timing crystals for wristwatch manufacture make the use of a non-return to zero (NRZ) code feasible since the timing is predictable enough for data recovery. The low power consumption of these devices allows lifetimes of up to 20 years on available batteries.

One element of the information and identity storage device is the code rate employed. High code rates allow for many reads at high speeds but are more difficult to decode and consume more power. Typical microwave antennas allow a reading window of about 300 mm. A transmitter spends about 3.5 milliseconds in this window at 320 km/h. Assuming at least 3 transmissions to be received, the total time for a transmission would be about 1 millisecond. A transmission comprises: 8 preamble bits and 64 data bits so that a sufficient code rate is about 65 khz. Doubling the frequency of a watch crystal provides a convenient rate of 65.5 khz with acceptably low power. At more common railroad and highway speeds such as 100 km/h, the transmitter can be read approximately ten times, with consequent improvement in accuracy. In order to read all four pages of data with three reads each, the maximum speed is 80 km/h which is more than adequate for those locations at which this information is required. With this code rate, the spacing of information and identity storage devices on adjacent railway cars can be of the order of a metre without any difficulty.

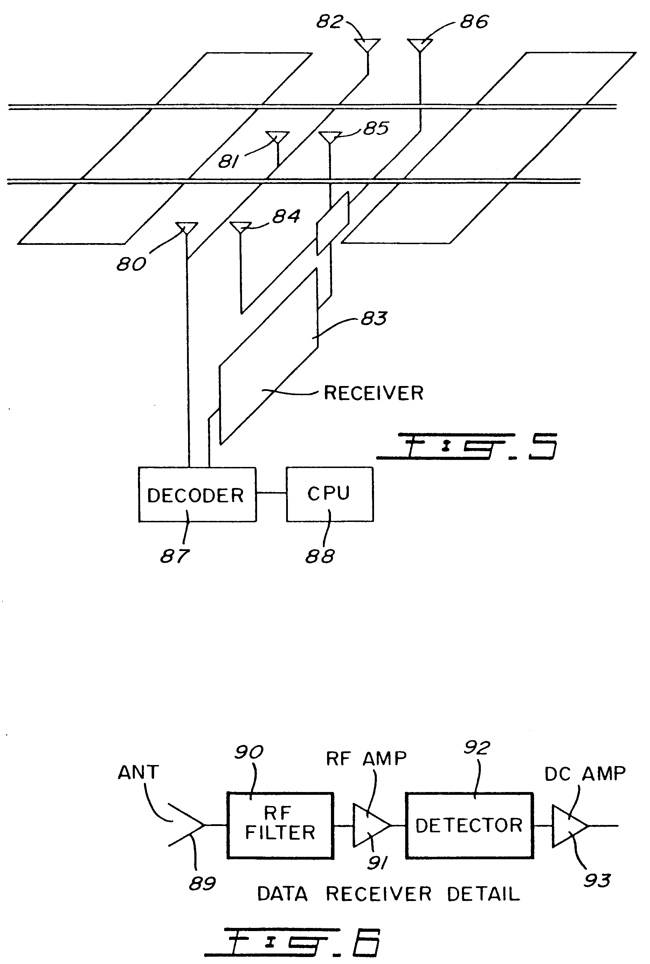

A block diagram of the logic circuit 13 is shown in Fig. 3. The logic circuit would be familiar to those skilled in the art. To achieve the very low current consumption required, the entire information and identity storage device is realized in a single CMOS integrated circuit or circuits. Its operation is as follows:

In response to a trigger impulse, the trigger circuit 14 resets the flip-flop 52 and the counters 53 and 54 and auxiliary counter 55 are allowed to count. Counter 54 sequentially selects memory addresses which cause the contents of the preamble store 56 and the first memory page 57 to be the output to the transmitter 16 which consequently sends out the coded signal. At various precisely timed points during the transmission, the program mode and page select circuit 59 allows memory paging or program mode entry. Access to the first 34 bits is controlled by the light activated switch 60. Data entry is also through the trigger circuit 14. The device is returned to its quiescent state either when counter 54 reaches the end of its count, signifying that all bits have been sent, or when auxiliary counter 55 ends its count.

The trigger circuit 14 may take one of several forms depending on a specific application. The characteristics of the trigger circuit are as follows:
1. High input impedance.
2. A threshold level of voltage is exceeded in order to initiate the transmission.
3. Trigger initiation is effected by an impulse rather than a steady state condition.
4. The trigger circuit is passive in the sense that its operational power is obtained from the triggering signal and consumes no energy in the quiescent state.

Energy may be provided to the trigger circuit 14 in various forms such as electromagnetic, magnetic, infrared, ultrasonic or pressure. In one embodiment used in the railroad environment, a burst of microwave energy is used as an interrogation signal. Figure 4 shows a trigger circuit suitable for receiving an interrogation signal 70 in the form of electromagnetic radiation, demodulating the burst with diodes 71 and capacitors 72 and matching the appropriate input impedance with a pulse transformer 73.

In order to access the additional pages of memory, a timed sequence of interrogation pulses is sent. A different sequence of pulses allows the memory to be written to, this access only being permitted to the "write protected" portion of memory unless the protect switch is illuminated. The individual bits of the memory are also programmed using appropriately timed interrogation pulses.

Included in the information and identity storage device 10 are two antennas 15 and 17. These could take various forms but in one embodiment, they operate at microwave frequencies. Both antennas and also all other circuitry in the device are mounted on a sheet of low loss material. The antennas consist of patches or arrays of patches of conductive material whose design would be familiar to one skilled in the art. The configuration of the patches is dependent on the frequency of operation and the desired antenna patterns. One antenna is associated with the trigger circuit 14 described above, and the other is connected to the transmitter 16 which is a single stage device arranged to produce energy at the desired frequency. An output of 1 to 10 milliwatts is more than sufficient for reliable operation of the system. In general, the operating frequency of the data link and the triggering link are different, but since they do not co-exist in time, they may be the same.

Fig. 5 illustrates a more detailed arrangement of the interrogation station 11. The embodiment shown represents one configuration suitable for railroad applications.

Alternative interrogation stations and receiving antennas may be employed.

Three microwave interrogator signal sources with antennas 80, 81, 82 are shown, one on each side and between the two ties of a railroad track to allow reading of information and identity storage devices on either side or under the cars. A coded signal receiver 83 with antennas 84, 85, 86 on either side and between the track is located beside the track along with the rest of the interrogation equipment 87, 88. The receiver is shown in more detail in Figure 6 and has an antenna 89, RF filter 90, RF amplifier 91, detector 92 and DC amplifier 93. Operating frequency is chosen to minimize noise and unwanted signals and is typically in the 2500 Mhz region.

Detected and amplified signals from the receiver are fed to the decoder 87 and microprocessor system 88 where they are checked for accuracy and then stored or transmitted to a host computer as required. Synchronization with the transmitter takes place in the decoder circuit which has an absolute time reference on the same frequency as the transmitter.

In one embodiment of the system, wheel contacts provide supplementary information such as speed and direction of the train. Wheel contacts indicate when the whole train has passed, and at this time the data is assembled in a format compatible with the central data processor to which it is sent either in response to an interrogation or on its own request. It is also possible to use reflected signals from the interrogating beam to determine the speed and direction using the doppler effect.

Although the embodiment described herein has been specifically described as being suitable for railroad use, it will be apparent to those skilled in the art, that the system has many applications and various changes may be made to the circuits and elements described herein without departing from the scope of the present invention which is limited only by the following claims.

## Claims

1. An electronic identification system for remotely programming and storing information on an object and remotely retrieving information from the object, including, in combination, an information and identity storage device (10) located on the object, and at least one interrogation station (11), one of said object and said station moving and the other of said object and station being fixed, said station being located relatively remotely from the object, for reading and programming the information and identity storage device (10) without physical contact when said one moves adjacent said other;
the information and identity storage device (10) comprising:
memory means (13) for storing information and identity data for later retrieval,
protect means for protecting a portion of the memory means against accidental erasure,
logic circuit means (13) for producing a predetermined coded signal representing the information and identity data stored in the memory means, the logic circuit means including means responsive to a control signal comprising a series of pulses from said interrogation station (11) for programming the portion of the memory means (13) not protected by the protect means based on the series of pulses comprising the control signal from the interrogation station (11),
transmitter means (16) including antenna means (17) for transmitting the coded signal,
trigger circuit means (14) which is triggered in response to receiving a burst of energy for, when triggered, causing the coded signal to be transmitted by the transmitter means,
the information and identity storage device (10) having a low power consuming quiescent mode and an active mode in which said transmitter means (16) is capable of transmitting the coded signal, said information and identity storage device (10) being responsive to triggering of said trigger circuit means to switch from the quiescent mode to the active mode, and
a battery power source (12) for the information and identity storage device (10),
the interrogation station (11) comprising:
interrogation signal means (22), including antenna means (19, 23), for triggering the trigger circuit means (14) in the information and identity storage device (10) by providing a burst of energy,
pulse sequence generating means (22) for generating a said control signal comprising a series of pulses for programming the portion of the memory means (13) in the information and identity storage device (10) not protected by the protect means,
receiver means (18) for receiving the coded signal from the information and identity storage device,
decoder means (20) for decoding the coded signal for verifying the accuracy of the coded signal, and for recovering the information and identity data stored in the memory means (13) of the information and identity storage device (10),
the system further comprising:
synchronization means between the information and identity storage device (10) and the receiver means (18) for synchronising the signals transmitted therebetween, in which said synchronization means comprise one of (i) a first absolute time source within said information and identity storage device (10) and a second absolute time source (87) within said interrogation station, said first time source and said second time source being chosen to have substantially the same frequency and sufficient stability such that said first time source remains in synchronism with said second time source within a single bit for the duration of transmission of any said coded signal and any said control signal and (ii) a free running clock within said information and identity storage device (10), and means to code a clock signal from said free running clock in said coded signal.

2. A system according to claim 1, characterised in that the memory means (13) have the ability to store a plurality of pages representing the information and identity.

3. A system according to claim 2, characterised in that the logic circuit means (13) are able to select from the plurality of pages upon receipt of predetermined timed interrogation pulses from the interrogation station (11).

4. A system according to claim 1, characterised in that -
(a) the object moves in a predetermined path and that at least one interrogation station (11) is located adjacent the predetermined path;
(b) a first antenna array (15) in the trigger circuit means (14) is adapted to pick up an interrogation signal;
(c) a second antenna array (17) is adapted to transmit the coded signal from the transmitter means (16);
(d) the interrogation signal means (22) are provided with an antenna (23) adapted to trigger the trigger circuit means (14) in the information and identity storage device (10); and
(e) the receiver means (18) are provided with an antenna (19) adapted to receive the coded signal from the information and identity storage device (10).

5. A system according to claim 2 or claim 3, characterised in that the protect means protect at least one page of the plurality of pages from accidental erasure.

6. A system according to claim 5, characterised by a light-activated switch (60) integral with the protect means which, when illuminated, permits at least one page of the plurality of pages protected by the protect means to be erased and re-programmed.

7. A system according to any preceding claim, characterised in that an additional power source is included with the battery power source (12), the additional power source being an inertial energy generator, a solar generator, an infra-red source, a light source, a magnetic induction source, a radio frequency energy source, and any combination of these sources.

8. A system according to any preceding claim, characterised in that the object is one of a number of railroad cars moving along a railroad track with each rail car having an information and identity storage device (10) programmed to produce a coded signal representing one or more of the following : rail car owner, car serial number, car destination, service information, tare and gross weights, contents and special handling considerations.

9. A system according to any preceding claim, characterised in that the means to program the portion of the memory means (13) not protected by the protect means include an appropriately-timed pulse sequence generating means.

10. A system according to any preceding claim, characterised in that the antenna means (17) of the transmitter means (16) and the antenna means (19,23) of the interrogation signal means (22) comprise patch antennas.

11. A system according to any preceding claim, characterised in that the power source (12) maintains a constant output to operate the absolute time source and maintain the trigger circuit means (14) in a ready condition to receive an interrogation signal prior to activation of the trigger circuit means.

12. A system according to any preceding claim, characterised in that the coded signal is read more than once.

13. A system according to claim 8 or any claim appendant thereto, characterised in that there is at least one interrogation station (11) with an antenna (84, 85, 86) located between and on both sides of the railroad track to allow for different locations of the information and identity storage devices (10) on the railroad cars.

14. A system according to any preceding claim, characterised in that the receiver means (18) in the interrogation station (11) adapted to receive the coded signal from the information and identity storage device (10) includes filters to reject unwanted signals.

15. A system according to any preceding claim characterised by wheel contact signal means to provide supplementary information such as speed and direction.

16. A system according to claim 8 and claim 15, characterised in that the information and identity on each railroad car is stored in a memory means (21) in the interrogation station (11) until the wheel contact means indicate a complete train has passed the interrogation station.

17. A system according to any one of claims 1 - 14, characterised by means adapted to use reflected signals from the interrogating beam to provide supplementary information using the Doppler effect.

18. A system according to any preceding claim, characterised in that the decoder means (20) verify the accuracy of the coded signal by including an integral count of the number of zeros in the coded signal.

## Patentansprüche

1. Ein elektronisches Identifikationssystem zum entfernten Programmieren und Speichern von Information auf einem Objekt und entfernten Wiedergewinnen von Information von dem Objekt, umfassend in Kombination eine auf dem Objekt angeordnete Informations- und Identitätsspeichereinrichtung (10) und zumindest eine Abfragestation (11), wobei sich das eine von dem Objekt und der Station bewegt und das andere von dem Objekt und der Station fixiert ist und wobei die Station zum Auslesen und Programmieren der Informations- und Identitätsspeichereinrichtung (10) ohne physischen Kontakt relativ entfernt von dem Objekt angeordnet ist, wenn sich das eine an das andere angrenzend bewegt,
wobei die Informations- und Identitätsspeichereinrichtung (10) umfaßt:
Speichermittel (13) zum Speichern von Informations- und Identitätsdaten zur späteren Wiedergewinnung,
Schutzmittel zum Schützen eines Abschnitts des Speichermittels gegen unbeabsichtigtes Löschen,
logische Schaltkreismittel (13) zum Erzeugen eines vorbestimmten kodierten Signals, das die in den Speichermitteln gespeicherten Informations- und Identitätsdaten darstellt, wobei die logischen Schaltkreismittel Mittel umfassen, die auf ein Steuersignal reagieren, welches eine Serie von Pulsen von der Abfragestation (11) zum auf der Serie von Pulsen, welche das Steuersignal von der Abfragestation (11) umfassen, basierenden Programmieren des Abschnitts der Speichermittel (13) umfaßt, der nicht durch die Schutzmittel geschützt ist,
ein Sendermittel (16) einschließlich Antennenmittel (17) zum Übertragen des kodierten Signals,
ein Steuerschaltkreismittel (14), das als Reaktion auf das Empfangen eines Energiestoßes getriggert ist, um, wenn getriggert, das Übertragen des kodierten Signals durch das Sendermittel zu veranlassen,
wobei die Informations- und Identitätsspeichereinrichtung (10) eine wenig Strom verbrauchende Ruhebetriebsart und eine aktive Betriebsart aufweist, in welcher das Sendermittel (16) das kodierte Signal übertragen kann, und wobei die Informations- und Identitätsspeichereinrichtung (10) auf das Triggern des Steuerschaltkreismittels reagiert, um von der Ruhebetriebsart zu der aktiven Betriebsart zu schalten, und
eine Batteriestromquelle (12) für die Informations- und Identitätsspeichereinrichtung (10),
wobei die Abfragestation (11) umfaßt:
Abfragesignalmittel (22) einschließlich Antennenmittel (19, 23) zum Triggern des Steuerschaltkreismittels (14) in der Informations- und Identitätsspeichereinrichtung (10) durch Bereitstelleo eines Energiestoßes,
Mittel (22) zum Erzeugen einer Pulssequenz zum Erzeugen des Steuersignals, welches eine Serie von Pulsen zum Programmieren des Abschnitts der Speichermittel (13) in der Informations- und Identitätsspeichereinrichtung (10) umfaßt, welcher nicht durch das Schutzmittel geschützt ist,
Empfängermittel (18) zum Empfangen des kodierten Signals von der Informations- und Identitätsspeichereinrichtung,
Dekodierermittel (20) zum Dekodieren des kodierten Signals zum Verifizieren der Genauigkeit des kodierten Signals und zum Wiedergewinnen der Informations- und Identitätsdaten, die in den Speichermitteln (13) der Informations- und Identitätsspeichereinrichtung (10) gespeichert sind,
und wobei das System weiter umfaßt:
Synchronisationsmittel zwischen der Informations- und Identitätsspeichereinrichtung (10) und den Empfängermitteln (18) zum Synchronisieren der dazwischen übertragenen Signale, in welchen die Synchronisationsmittel umfassen einen von (i) einem ersten absoluten Zeitgeber innerhalb der Informations- und Identitätsspeichereinrichtung (10) und einem zweiten absoluten Zeitgeber (87) innerhalb der Abfragestation, wobei der erste Zeitgeber und der zweite Zeitgeber so ausgewählt sind, daß sie im wesentlichen dieselbe Frequenz und eine ausreichende Stabilität aufweisen, so daß der erste Zeitgeber innerhalb eines einzelnen Bits in Synchronität mit dem zweiten Zeitgeber für die Dauer der Übertragung eines jeden kodierten Signals und eines jeden Steuersignals verbleibt, und (ii) einem frei laufenden Zeitgeber innerhalb der Informations- und Identitätsspeichereinrichtung (10) und Mittel zum Kodieren eines Taktsignals von dem frei laufenden Zeitgeber in dem kodierten Signal.

2. System nach Anspruch 1, dadurch gekennzeichnet, daß die Speichermittel (13) die Fähigkeit besitzen, eine Vielzahl von Seiten zu speichern, die die Information und Identität darstellen.

3. System nach Anspruch 2, dadurch gekennzeichnet, daß die logischen Schaltkreismittel (13) nach Empfang vorbestimmter zeitlich gesteuerter Abfragepulse von der Abfragestation (11) aus der Vielzahl von Seiten auswählen können.

4. System nach Anspruch 1, dadurch gekennzeichnet, daß -
a) sich das Objekt auf einem vorbestimmten Pfad bewegt und daß zumindest eine Abfragestation (11) an den vorbestimmten Pfad angrenzend angeordnet ist,
b) eine erste Antennenanlage (15) in dem Steuerschaltkreismittel (14) zum Auffangen eines Abfragesignals angepaßt ist,
c) eine zweite Antennenanlage (17) zum Übertragen des kodierten Signals von dem Sendermittel (16) angepaßt ist,
d) die Abfragesignalmittel (22) mit einer Antenne (23) versehen sind, die zum Triggern des Steuerschaltkreismittels (14) in der Informations- und Identitätsspeichereinrichtung (10) angepaßt ist, und
e) die Empfängermittel (18) mit einer Antenne (19) versehen sind, die zum Empfangen des kodierten Signals von der Informations- und Identitätsspeichereinrichtung (10) angepaßt ist.

5. System nach Anspruch 2 oder 3, dadurch gekennzeichnet, daß die Schutzmittel zumindest eine Seite der Vielzahl von Seiten gegen unbeabsichtigtes Löschen schützen.

6. System nach Anspruch 5, gekennzeichnet durch einen integral mit den Schutzmitteln ausgebildeten lichtgesteuerten Schalter (60), der, wenn beleuchtet, ein Löschen und Umprogrammieren von zumindest einer Seite der Vielzahl von durch die Schutzmittel geschützten Seiten möglich macht.

7. System nach einem vorhergehenden Anspruch, dadurch gekennzeichnet, daß mit der Batteriestromquelle (12) eine zusätzliche Stromquelle eingeschlossen ist, wobei die zusätzliche Stromquelle ein Inertialenergiegenerator, ein Solargenerator, eine Infrarotquelle, eine Lichtquelle, eine magnetische Induktionsquelle, eine Radiofrequenz-Energiequelle und jede Kombination dieser Quellen ist.

8. System nach einem vorhergehenden Anspruch, dadurch gekennzeichnet, daß das Objekt eines von einer Anzahl an Schienenfahrzeugen ist, welche sich entlang einem Schienengleisstrang bewegen, wobei jedes Schienenfahrzeug eine Informations- und Identitätsspeichereinrichtung (10) aufweist, die zum Erzeugen eines kodierten Signals programmiert ist, welches eines oder mehrere des folgenden darstellt: Schienenfahrzeugeigentümer, Fahrzeugseriennummer, Fahrzeugbestimmung, Serviceinformation, Leer- und Gesamtgewichte, Inhalte und spezielle Gebrauchshinweise.

9. System nach einem vorhergehenden Anspruch, dadurch gekennzeichnet, daß die Mittel zum Programmieren des nicht durch die Schutzmittel geschützten Abschnitts der Speichermittel (13) ein in geeigneter Weise zeitlich gesteuertes Mittel zum Erzeugen einer Pulssequenz umfassen.

10. System nach einem vorhergehenden Anspruch, dadurch gekennzeichnet, daß die Antennenmittel (17) des Sendermittels (16) und die Antennenmittel (19, 23) der Abfragesignalmittel (22) Steckantennen ("patch antennas") umfassen.

11. System nach einem vorhergehenden Anspruch, dadurch gekennzeichnet, daß die Stromquelle (12) eine konstante Ausgangsleistung beibehält, um den absoluten Zeitgeber zu betreiben und das Steuerschaltkreismittel (14) in einem betriebsbereiten Zustand zu halten, um vor der Aktivierung des Steuerschaltkreismittels ein Abfragesignal zu empfangen.

12. System nach einem vorhergehenden Anspruch, dadurch gekennzeichnet, daß das kodierte Signal mehr als einmal gelesen wird.

13. System nach Anspruch 8 oder einem diesem nachgeordneten Anspruch, dadurch gekennzeichnet, daß zumindest eine Abfragestation (11) mit einer Antenne (84, 85, 86) vorliegt, die zwischen und auf beiden Seiten des Schienengleisstrangs angeordnet ist, um unterschiedliche Positionen der Informations- und Identitätsspeichereinrichtungen (10) auf den Schienenfahrzeugen zu gestatten.

14. System nach einem vorhergehenden Anspruch, dadurch gekennzeichnet, daß die Empfängermittel (18) in der Abfragestation (11), die zum Empfangen des kodierten Signals von der Informations- und Identitätsspeichereinrichtung (10) angepaßt sind, Filter zum Zurückweisen unerwünschter Signale aufweisen.

15. System nach einem vorhergehenden Anspruch, gekennzeichnet durch Radkontaktsignalmittel zum Bereitstellen ergänzender Information wie bspw. Geschwindigkeit und Richtung.

16. System nach Anspruch 8 und Anspruch 15, dadurch gekennzeichnet, daß die Information und Identität über jedes Schienenfahrzeug in einem Speichermittel (21) in der Abfragestation (11) gespeichert sind, bis die Radkontaktmittel anzeigen, daß ein vollständiger Zug die Abfragestation passiert hat.

17. System nach einem der Ansprüche 1-14, gekennzeichnet durch Mittel, die zum Gebrauchen reflektierter Signale von dem abfragenden Strahl angepaßt sind, um ergänzende Information unter Ausnutzung des Dopplereffekts bereitzustellen.

18. System nach einem vorhergehenden Anspruch, dadurch gekennzeichnet, daß die Dekodierermittel (20) die Genauigkeit des kodierten Signals durch Einschließen einer integralen Zählung der Anzahl an Nullen in dem kodierten Signal verifizieren.

## Revendications

1. Système d'identification électronique destiné à programmer et à stocker à distance des informations sur un objet et à récupérer à distance des informations de l'objet, comprenant, en combinaison, un dispositif de stockage d'informations et d'identité (10) situé sur l'objet, et au moins une station d'interrogation (11), un premier parmi ledit objet et ladite station étant mobile et l'autre élément parmi ledit objet et ladite station étant fixe, ladite station étant située de manière relativement éloignée de l'objet, pour lire et programmer le dispositif de stockage d'informations et d'identité (10) sans contact physique lorsque ledit premier se déplace de manière adjacente audit autre ;
le dispositif de stockage d'informations et d'identité (10) comportant :
des moyens de mémoire (13) destinés à stocker des données d'information et d'identité pour une extraction ultérieure,
des moyens de protection destinés à protéger une partie des moyens de mémoire contre tout effacement accidentel,
des moyens de circuit logique (13) destinés à produire un signal codé prédéterminé représentant les données d'information et d'identité stockées dans les moyens de mémoire, les moyens de circuit logique comprenant des moyens sensibles à un signal de commande comportant une série d'impulsions provenant de ladite station d'interrogation (11) pour programmer la partie des moyens de mémoire (13) non protégée par les moyens de protection sur la base de la série d'impulsions comprenant le signal de commande provenant de la station d'interrogation (11),
des moyens émetteurs (16) comprenant des moyens d'antenne (17) pour transmettre le signal codé,
des moyens de circuit de déclenchement (14) qui sont déclenchés en réponse à la réception d'une salve d'énergie pour, lorsqu'il est déclenché, entraîner l'émission du signal codé par les moyens émetteurs,
le dispositif de stockage d'informations et d'identité (10) ayant un mode au repos consommant peu d'énergie et un mode actif dans lequel lesdits moyens émetteurs (16) peuvent transmettre le signal codé, ledit dispositif de stockage d'informations et d'identité (10) étant sensible au déclenchement desdits moyens de circuit de déclenchement pour passer du mode au repos au mode actif, et
une source d'alimentation par batterie (12) pour le dispositif de stockage d'informations et d'identité (10),
la station d'interrogation (11) comprenant :
des moyens de signal d'interrogation (22), comprenant des moyens d'antenne (19, 23), destinés à déclencher les moyens de circuit de déclenchement (14) dans le dispositif de stockage d'informations et d'identité (10) en fournissant une salue d'énergie,
des moyens destinés à générer une séquence d'impulsions (22) destinés à générer un dit signal de commande comportant une série d'impulsions pour programmer la partie des moyens de mémoire (13) dans le dispositif de stockage d'informations et d'identité (10) non protégée par les moyens de protection,
des moyens récepteurs (18) destinés à recevoir le signal codé provenant du dispositif de stockage d'informations et d'identité,
des moyens décodeurs (20) destinés à décoder le signal codé pour vérifier la précision du signal codé, et pour récupérer les données d'informations et d'identité stockées dans les moyens de mémoire (13) du dispositif de stockage d'informations et d'identité (10),
le système comportant en outre :
des moyens de synchronisation entre le dispositif de stockage d'informations et d'identité (10) et les moyens récepteurs (18) destinés à synchroniser les signaux émis entre eux, dans lequel lesdits moyens de synchronisation comprennent un élément parmi (i) une première source de temps absolu à l'intérieur dudit dispositif de stockage d'informations et d'identité et une seconde source de temps absolu (87) à l'intérieur de ladite station d'interrogation, ladite première source de temps absolu et ladite seconde source de temps absolu étant choisies pour avoir sensiblement la même fréquence et une stabilité suffisante de telle sorte que ladite première source de temps reste en synchronisme avec ladite seconde source de temps dans un seul bit pendant la durée d'émission de n'importe quel dit signal codé et de n'importe quel dit signal de commande et (ii) une horloge non synchronisée à l'intérieur dudit dispositif de stockage d'informations et d'identité (10), et des moyens pour coder un signal d'horloge à partir de ladite horloge non synchronisée dans ledit signal codé.

2. Système selon la revendication 1, caractérisé en ce que les moyens de mémoire (13) ont la capacité de stocker plusieurs pages représentant les informations et l'identité.

3. Système selon la revendication 2, caractérisé en ce que les moyens de circuit logique (13) peuvent sélectionner à partir de plusieurs pages lors de la réception d'impulsions d'interrogation cadencées prédéterminées à partir de la station d'interrogation (11).

4. Système selon la revendication 1, caractérisé en ce que :
(a) l'objet se déplace selon une trajectoire prédéterminée et en ce qu'au moins une station d'interrogation (11) est située de manière adjacente à la trajectoire prédéterminée ;
(b) une première antenne réseau (15) dans les moyens de circuit de déclenchement (14) est adaptée pour saisir un signal d'interrogation ;
(c) une seconde antenne réseau (17) est adaptée pour transmettre le signal codé depuis les moyens d'émission (16) ;
(d) les moyens de signal d'interrogation (22) sont munis d'une antenne (23) adaptée pour déclencher les moyens de circuit de déclenchement (14) dans le dispositif de stockage d'informations et d'identité (10) ; et
(e) les moyens récepteurs (18) sont munis d'une antenne (19) adaptée pour recevoir le signal codé depuis le dispositif de stockage d'informations et d'identité (10)

5. Système selon la revendication 2 ou la revendication 3, caractérisé en ce que les moyens de protection protègent au moins une page parmi une pluralité de pages d'un effacement accidentel.

6. Système selon la revendication 5, caractérisé par un commutateur à commande optique (60) d'un seul tenant avec les moyens de protection qui, lorsqu'il est éclairé, permet à au moins une page parmi plusieurs pages protégées par les moyens de protection d'être effacée et reprogrammée.

7. Système selon l'une quelconque des revendications précédentes, caractérisé en ce qu'une source d'alimentation supplémentaire est comprise avec la source d'alimentation par batterie (12), la source d'alimentation supplémentaire étant un générateur d'énergie inertielle, un générateur solaire, une source infrarouge, une source lumineuse, une source d'induction magnétique, une source d'énergie haute fréquence, et n'importe quelle combinaison de celles-ci.

8. Système selon l'une quelconque des revendications précédentes, caractérisé en ce que l'objet est l'un parmi un certain nombre de wagons de chemin de fer se déplaçant le long d'une voie avec chaque wagon ayant un dispositif de stockage d'informations et d'identité (10) programmé pour produire un signal codé représentant un élément ou plus parmi ce qui suit : un propriétaire de wagon, un numéro de série de wagon, la destination du wagon, les informations sur le service, le poids à vide et le poids total en charge, des considérations de contenu et de manipulation spéciale.

9. Système selon l'une quelconque des revendications précédentes, caractérisé en ce que les moyens destinés à programmer la partie des moyens de mémoire (13) non protégée par les moyens de protection comprennent des moyens destinés à générer une séquence d'impulsions cadencées de manière appropriée.

10. Système selon l'une quelconque des revendications précédentes, caractérisé en ce que les moyens d'antenne (17) des moyens émetteurs (16) et les moyens d'antenne (19, 23) des moyens de signal d'interrogation (22) comprennent des antennes à pièces.

11. Système selon l'une quelconque des revendications précédentes, caractérisé en ce que la source d'alimentation (12) maintient une sortie constante pour faire fonctionner la source de temps absolu et maintenir les moyens de circuit de déclenchement (14) dans un état prêt pour recevoir un signal d'interrogation avant l'activation des moyens de circuit de déclenchement.

12. Système selon l'une quelconque des revendications précédentes, caractérisé en ce que le signal codé est lu plus d'une fois.

13. Système selon la revendication 8 ou n'importe quelle revendication dépendant de celle-ci, caractérisé en ce qu'il y a au moins une station d'interrogation (11) avec une antenne (84, 85, 86) située entre et des deux côtés de la voie pour permettre différents emplacements des dispositifs de stockage d'informations et d'identité (10) sur les wagons.

14. Système selon l'une quelconque des revendications précédentes, caractérisé en ce que les moyens récepteurs (18) dans la station d'interrogation (11) adaptés pour recevoir le signal codé depuis le dispositif de stockage d'informations et d'identité (10) comprennent des filtres pour rejeter les signaux non voulus.

15. Système selon l'une quelconque des revendications précédentes, caractérisé par des moyens de signal de contact de roue pour fournir des informations supplémentaires telles que la vitesse et la direction.

16. Système selon la revendication 8 et la revendication 15, caractérisé en ce que les informations et l'identité sur chaque wagon sont stockées dans des moyens de mémoire (21) dans la station d'interrogation (11) jusqu'à ce que les moyens de contact de roue indiquent qu'un train complet a dépassé la station d'interrogation.

17. Système selon l'une quelconque des revendications 1 à 14, caractérisé par des moyens adaptés pour utiliser des signaux réfléchis à partir du faisceau d'interrogation pour fournir des informations supplémentaires en utilisant l'effet Doppler.

18. Système selon l'une quelconque des revendications précédentes, caractérisé en ce que les moyens décodeurs (20) vérifient la précision du signal codé en comprenant un compte intégral du nombre de zéros dans le signal codé.
